# EUROPÄISCHE PATENTSCHRIFT

(11) **EP 0 537 674 B1**
(45) Veröffentlichungstag und Bekanntmachung des Hinweises auf die Patenterteilung: **20.08.1997**
(21) Anmeldenummer: 92117454.6
(22) Anmeldetag: 13.10.1992
(51) Int. Cl.: B28D 1/30, B28D 1/04, B28D 1/18, B25B 11/00, B23Q 1/25, B24B 41/06, C03B 33/03

(54) **Vorrichtung zum Zuschneiden und zur Kantenbearbeitung plattenförmiger Werkstücke**
Device for cutting out and machining edges of flat workpieces
Dispositif pour le découpage et pour le chaufreinage des articles plats

(30) Priorität: 17.10.1991 DE 4134273
(43) Veröffentlichungstag der Anmeldung: 21.04.1993
(73) Patentinhaber: Mayer, Wolfgang, A-5020 Salzburg (AT)
(72) Erfinder: Mayer, Wolfgang, A-5020 Salzburg (AT)
(74) Vertreter: Haft, von Puttkamer, Berngruber, Czybulka

(56) Entgegenhaltungen:
- EP-A- 0 369 562
- DE-A- 3 316 980
- US-A- 2 838 041
- US-A- 4 410 168
- US-A- 4 660 539
- US-A- 4 723 766

## Beschreibung

Die Erfindung bezieht sich auf eine Vorrichtung zum Zuschneiden eines Werkstücks mit mindestens einer ebenen Fläche und zur Bearbeitung der Kanten der zugeschnittenen Einzelteile.

Wenn beispielsweise eine Tischplatte aus Marmor für einen Waschtisch hergestellt werden soll, wird heutzutage so vorgegangen, daß man die angelieferte Marmorplatte vorgegebener Größe auf ein Gerüst legt, die Marmorplatte dann entlang der Außenkontur der Waschtischplatte zerschneidet, wobei in der Mitte der Platte die Öffnung für das Waschbecken herausgeschnitten wird. Anschließend werden die Kanten am Umfang der Kante und an der Öffnung maßgenau nachbearbeitet und mit einem Profilfräser mit einem bestimmten Profil versehen und weiterverarbeitet, wie geschliffen, poliert oder dgl. Dazu muß die Waschtischplatte von dem Gerüst genommen und so aufgebockt werden, daß die Kanten für den Profilfräser gut zugänglich sind. Wenn eine rechnergesteuerte Werkzeugmaschine verwendet wird, muß diese auf einen Referenzpunkt der aufgebockten Tischplatte eingestellt werden. Aus dem Rest der Marmorplatte werden dann in gleicher Weise andere Tischplatten oder Gegenstände herausgeschnitten und bearbeitet.

In gleicher Weise wird vorgegangen, wenn plattenförmige Werkstücke verschiedener Größe und Form aus einem anderen plattenförmigen Ausgangsmaterial hergestellt werden, beispielsweise aus Glas, Holz, Metall oder Kunststoff.

Das Zuschneiden des Werkstücks und die Kantenbearbeitung dieser Einzelstücke erfordert also zahlreiche zeit- und arbeitsaufwendige Manipulationen, die zugleich die Gefahr einer Beschädigung des Werkstücks in sich bergen.

Eine Vorrichtung nach dem Oberbegriff des Anspruchs 1 geht bereits aus US-A-4,723,766 hervor. Danach ist zur Bewegung jedes Stößels von der eingefahrenen in die ausgefahrene Position ein pneumatischer Arbeitszylinder vorgesehen. Jeder Arbeitszylinder ist mit Schläuchen an eine Druckluftquelle und eine Vakuumquelle angeschlossen. Da die Arbeitszylinder und die Schläuche relativ viel Platz in Anspruch nehmen, weist die plattenförmige Aufnahme der bekannten Vorrichtung nur wenige Stößel auf, so daß nur größere Werkstücke bearbeitet werden können. Darüberhinaus ist die Luft in den Arbeitszylindern komprimierbar, so daß nur eine Bearbeitung leichter Werkstücke mit geringen Schnittkräften möglich ist. Wenn die Dichtigkeit der Arbeitszylinder unterschiedlich ist, kann das Werkstück eine geneigte Stellung einnehmen.

Aus DE-A-3 316 980 ist ein Tisch zum Spannen von Werkstücken mit mehreren sich in Tischlängrichtung erstreckenden Trägerleisten bekannt, die jeweils mit mehreren Saugköpfen versehen sind. Jede Trägerleiste ist mit zwei Hubzylindern, die an Quertraversen befestigt sind, auf- und abbewegbar.

Aus US-A-4,410,169 ist eine Vorrichtung bekannt, mit der ein Waver zu Chips zerlegt wird. Dazu ist ein Rahmen mit einer Gummimembran vorgesehen, auf der der Waver angeordnet und mit einer Schneidemaschine zu den einzelnen Chips vorgeritzt wird. Mit einem Stößel werden dann aus dem Waver die einzelnen Chips herausgebrochen.

Aufgabe der Erfindung ist es, eine einfach aufgebaute Vorrichtung bereitzustellen, mit der auch schwerere Werkstücke unterschiedlicher Größe mit größeren Schnittkräften genau bearbeitet werden können.

Dies wird erfindungsgemäß mit der im Anspruch 1 gekennzeichneten Vorrichtung erreicht. In den Unteransprüchen sind vorteilhafte Ausgestaltungen der Erfindung wiedergegeben.

Die erfindungsgemäße Vorrichtung ist in erster Linie zum Zuschneiden von plattenförmigen Werkstücken bestimmt. Jedoch können auch andere Werkstücke mit ihr zugeschnitten und deren Kanten bearbeitet werden. Wesentlich ist lediglich, daß das Werkstück zumindest eine ebene Fläche aufweist, mit der es auf den Stößeln aufliegt. Das Werkstück kann aus Stein, insbesondere Marmor, Glas, Keramik, Holz, Metall, Kunststoff oder einem anderen Material bestehen.

Die plattenförmige Aufnahme kann rechtwinklig ausgebildet sein. Ihre Größe richtet sich nach der Größe des plattenförmigen Werkstücks, aus dem die Einzelteile herausgeschnitten werden. Insbesondere bei Marmor- und anderen Steinplatten reicht im allgemeinen eine plattenförmige Aufnahme mit einer Länge von zwei bis vier und einer Breite von ein bis zwei Metern aus. Die plattenförmige Aufnahme richtet sich nach der Größe der zu bearbeitenden Rohtafeln.

Die Stößel sind zweckmäßigerweise gleichmäßig über die plattenförmige Aufnahme verteilt. Dazu können sie rasterförmig, also an den Schnittpunkten rechtwinkliger Koordinaten auf der plattenförmigen Aufnahme angeordnet sein, oder entlang paralleler, diagonal verlaufender Linien oder entlang konzentrischer Kreise oder nach irgendeinem anderen Raster oder Muster.

Der Abstand der Stößel voneinander richtet sich nach der Größe des kleinsten zuzuschneidenden Einzelteils. Das heißt, der Abstand der Stößel voneinander muß so sein, daß auch an dem kleinsten herausgeschnittenen Einzelteil mindestens drei Stößel angreifen, damit das Einzelteil von den Stößeln sicher getragen wird, so daß es gegenüber dem Rest des plattenförmigen Werkstücks bzw. der benachbarten aus dem plattenförmigen Werkstück herausgeschnittenen Einzelteile mit den Stößeln sicher herausgeschoben werden kann, um seine Kanten zur Bearbeitung mit dem Kantenbearbeitungswerkzeug freizulegen.

Um das Werkstück auf den Stößeln beim Zuschneiden und bei der Kantenbearbeitung sicher zu fixieren, sind die Stößel an ihrem am Werkstück angreifenden Ende rutschfest ausgebildet. Um eine feste Haftung des Werkstücks an den Stößeln zu erreichen, können am Ende jedes Stößels mit Unterdruck beaufschlagbare Sauger vorgesehen sein oder eine rutschfeste Gummiauflage. Bei der Bearbeitung von Metallplatten sind auch magnetische Halter denkbar und bei weichen Materialien, wie Holz oder Kunststoff, Spitzen, die in die Plattenoberfläche eindringen.

Die plattenförmige Aufnahme ist insbesondere bei schweren Werkstücken im allgemeinen waagrecht angeordnet, also als Tisch ausgebildet. Bei einer Bearbeitung leichterer Materialien, beispielsweise Holz- oder Kunststoffplatten, kann die plattenförmige Aufnahme jedoch auch schräg oder senkrecht angeordnet sein. In diesem Falle müssen jedoch das zu zerschneidende Werkstück und die zugeschnittenen Einzelteile von den Stößein ebenfalls in schräger bzw. senkrechter Position festgehalten werden, was beispielsweise durch mit Unterdruck beaufschlagbare Sauger an den Stößeln möglich ist. Denkbar ist auch eine hängende Bearbeitung mit unten angeordnetem Werkstück.

Vorzugsweise arbeitet die erfindungsgemäße Vorrichtung mit einer rechner- oder numerisch gesteuerten Werkzeugmaschine zum Zuschneiden des Werkstücks und zur Bearbeitung der Kanten der Einzelteile zusammen. Die Bedienung der Vorrichtung kann auch manuell z.B. über ein Steuerpult erfolgen. Die Steuerung der Stößel der erfindungsgemäßen Vorrichtung und die Steuerung der Werkzeugmaschine können dabei durch einen gemeinsamen Rechner erfolgen. Wenn mehrere Einzelteile aus der Ausgangsplatte herausgeschnitten und deren Kanten mit der rechnergesteuerten Werkzeugmaschine bearbeitet werden, reicht es aus, die Werkzeugmaschine auf einen einzigen Referenzpunkt auf der Ausgangsplatte auszurichten.

Der Arbeitskopf der Werkzeugmaschine kann mit verschiedenen Werkzeugen bestückbar sein, beispielsweise mit einem Fingerfräser, Bohrern sowie Profilfräsern für verschiedene Kantenbreiten und -profile sowie mit Schleif- und Polierwerkzeugen. Das Ausschneiden der Einzelteile aus der Ausgangsplatte kann durch CAD optimiert werden.

Die Stößel der erfindungsgemäßen Vorrichtung sind einzeln steuerbar, also einzeln ausfahr- und einfahrbar, damit das Einzelteil, dessen Kanten bearbeitet werden sollen, so weit von der restlichen Platte bzw. den um sie angeordneten anderen zugeschnittenen Einzelteile herausgefahren werden kann, daß das Kantenbearbeitungswerkzeug der Werkzeugmaschine die Kanten des betreffenden Einzelteils ohne Beeinträchtigung durch die restliche Platte bzw. anderen Einzelteile bearbeiten kann.

Die Stößel können dazu als Stangen ausgebildet sein, die in an der plattenförmigen Aufnahme vorgesehenen Buchsen gelagert sind. Jedoch ist es z.B. auch möglich, die Stößel als Gewindespindeln auszubilden. Die Betätigung der Stößel kann z.B. pneumatisch, hydraulisch oder elektrisch erfolgen.

Damit nicht für jeden Stößel eine eigene Hubeinrichtung vorgesehen werden muß, was relativ kostspielig sein kann, weist die erfindungsgemäße Vorrichtung zur Bewegung der Stößel von der eingefahrenen in die ausgefahrene Position auf der von dem Werkstück abgewandten Seite der plattenförmigen Aufnahme vorzugsweise einen gegenüber der Aufnahme beweglichen plattenförmigen Schieber auf. Ferner ist für jeden Stößel eine einzeln ansteuerbare Arretiereinrichtung vorgesehen. Um die an dem zugeschnittenen Einzelteil angreifenden Stößel in die ausgefahrene Position zu bewegen, können dann zunächst alle Stößel durch Bewegung der Aufnahme und der Schieber aufeinander zu ausgefahren werden. Die Arretiereinrichtungen, die an dem zugeschnittenen Einzelteil angreifen, dessen Kanten bearbeitet werden sollen, werden dann betätigt, worauf die Aufnahme und der Schieber voneinander weg bewegt werden, wodurch die Stößel, deren Arretiereinrichtung nicht betätigt worden ist, in die eingefahrene Position zurückbewegt werden, beispielsweise aufgrund der Schwerkraft, einer Feder oder dgl.

Das heißt, jeder Stößel ist, wenn er durch den Hub des plattenförmigen Schiebers oder durch Absenken der plattenförmigen Aufnahme durch den Schieber aus der plattenförmigen Aufnahme herausgedrückt worden ist, in der herausgefahrenen Position mittels der ihm zugeordneten Arretiereinrichtung verriegelbar. Die Bewegung der Stößel mit dem plattenförmigen Schieber hat zugleich den Vorteil, daß alle Stößel, die das Werkstück tragen, dessen Kanten zu bearbeiten sind, um die gleiche Distanz ausgefahren werden.

Wenn Ausgangsplatten unterschiedlicher Dicke eingesetzt werden, ist es möglich, die Stößel teleskopierbar auszubilden. Bei Natursteinplatten kommt es häufiger vor, daß die beiden Plattenoberflächen nicht parallel verlaufen, sondern die Platte an einem Ende dünner ausgebildet ist als an dem anderen. In einem solchen Fall wird die Steinplatte vorzugsweise mit ihrer Sichtseite, also ihrer polierten Seite, auf die Stößel gelegt, so daß der Kantenprofilfräser ein an die polierte Oberfläche anschließendes einwandfreies Kantenprofil erzeugt.

Statt dessen ist es auch möglich, die Platte mit der Sichtseite nach oben auf der plattenförmigen Aufnahme anzuordnen. Um die Sichtseite in die waagrechte Position zu bringen, kann dann beispielsweise ein zur plattenförmigen Aufnahme paralleler, also waagrechter plattenförmiger Anschlag vorgesehen sein, gegen den die Ausgangsplatte mit den Stößeln so gedrückt wird, daß sie mit ihrer Sichtseite waagrecht ausgerichtet wird.

Nachstehend ist eine Ausführungsform der erfindungsgemäßen Vorrichtung anhand der Zeichnung näher erläutert. Darin zeigen:
- Fig. 1: eine perspektivische Draufsicht auf die plattenförmige Aufnahme der Vorrichtung mit mehreren zugeschnittenen und einem an der Kante mit einem Werkzeug bearbeiteten Einzelteil in schematischer Wiedergabe und mit weggebrochenen Teilen;
- Fig. 2: einen Querschnitt durch einen Seitenabschnitt der Vorrichtung;
- Fig. 3: einen Querschnitt durch zwei unterschiedlich ausgebildete Stößel; und
- Fig. 4: zwei unterschiedliche Fräser am Einzelteil.

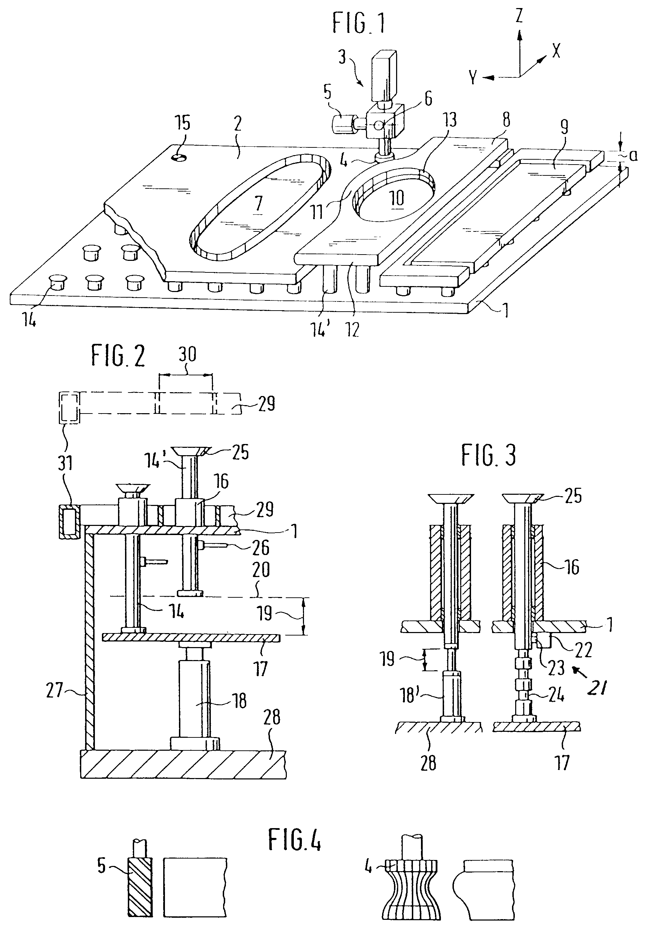

Gemäß Fig. 1 ist auf einer als Tisch ausgebildeten plattenförmigen Aufnahme 1 ein plattenförmiges Werkstück 2 z.B. aus Marmor gelegt. Über der Platte 2 ist der Arbeitskopf 3 einer nicht näher dargestellten rechnergesteuerten Werkzeugin X-, Y- und Z-Richtung beweglich angeordnet. Der Arbeitskopf 3 ist mit mehreren Werkzeugen 4, 5 bestückt, die durch Drehung um die Achse 6 in ihre Arbeitsstellung verschwenkbar sind, wobei das in Fig. 1 in Arbeitsstellung geschwenkte Werkzeug 4 durch einen Profilfräser gebildet wird.

Aus der Platte 2 sind mit dem Fräser 5 vorher die drei Einzelteile 7, 8 und 9 herausgeschnitten worden, wobei das Einzelteil 7 eine ovale Platte, das Einzelteil 8 eine Platte für einen Waschtisch und das Einzelteil 9 eine rechteckige Platte bilden. Die Waschtischplatte 8 ist mit einer runden Öffnung 10 versehen und an einer Längskante im Bereich der Öffnung 10 mit einer Ausbuchtung 11.

Während sich die zugeschnittenen Einzelteile 7 und 9 (noch) in der gleichen Ebene wie die Ausgangsplatte 2 befinden, ist das Einzelteil 8, also die Waschtischplatte gegenüber der Platte 2 bzw. den benachbarten Einzelteilen 7 und 9 so angehoben, daß der Profilfräser 4 die Außenkanten 12 und die Innenkante 13 bearbeiten kann. Dazu muß das Einzelteil 8 um mindestens die Höhe der Kanten 12, 13, also mindestens die Dicke a der Platte 2 angehoben werden.

Zum Anheben der Platte 8 bzw. zum wahlweisen Anheben einer der plattenförmigen Einzelteile 7, 8 und 9 oder des Reststücks 10 ist die plattenförmige Aufnahme 1 mit einer Vielzahl gleichmäßig verteilter Stößel 14, 14' versehen. Während auf den ausgefahrenen Stößeln 14', das aus der Platte 2 angehobene Einzelteil 8 angeordnet ist, befinden sich alle übrigen Stößel 14 in der eingefahrenen Position. Die Einzelteile 7, 8, 9 brauchen dabei nicht nacheinander angehoben zu werden, um ihre Kanten zu bearbeiten, vielmehr können im Abstand voneinander angeordnete Einzelteile, wie die Einzelteile 7 und 9 auch gleichzeitig durch die darunter angeordneten Stößel 14 angehoben werden, da auch dann ein einwandfreier Kantenzugriff für das Werkzeug 4 gewährleistet ist.

Zum Herausschneiden der Einzelteile 7, 8, 9 aus der Ausgangsplatte 2 und zur Kantenbearbeitung der Einzelteile 7, 8, 9 braucht die rechnergesteuerte Werkzeugmaschine nur einmal auf einen Referenzpunkt 15 eingestellt zu werden.

Damit jedes Einzelteil 7, 8, 9 wahlweise angehoben werden kann, sind die Stößel 14 einzeln ansteuerbar, d.h. aus der Aufnahme 1 ausfahrbar ausgebildet. Gemäß Fig. 2 und 3 sind dazu die Stößel 14 als Stangen ausgebildet, die in Buchsen 16 verschiebbar gelagert sind. Weiterhin ist unterhalb der plattenförmigen Aufnahme 1 ein plattenförmiger Schieber 17 vorgesehen, der mit einem Zylinder 18, einer Spindel oder einer anderen Hubeinrichtung in Richtung des Pfeiles 19 heb- und senkbar ist. Wenn der Schieber 17 von der in Fig. 2 mit ausgezogenen Linien dargestellten unteren Position in die in Fig. 2 durch eine gestrichelte Linie 20 wiedergegebene obere Position angehoben worden ist, werden alle Stößel 14 in die ausgefahrene Position bewegt, in Fig. 2 also auch der links dargestellte Stößel 14. Damit die Stößel 14 ausgefahren bleiben, die gemäß Fig. 1 das an den Kanten 12, 13 zu bearbeitende Einzelteil 8 tragen, wenn der Schieber 17 wieder in die untere Position zurückbewegt wird, ist jedem Stößel 14 eine Arretiereinrichtung 21 zugeordnet, die in Fig. 3 rechts näher dargestellt ist und aus einem z.B. pneumatisch, hydraulisch oder elektrisch zu betätigendem Kurzhubzylinder 22 besteht, dessen zum Stößel 14 quer verlaufende Verriegelung 23 in eine von mehreren Ringnuten 24 des Stößels 14 einrastet, wenn der Stößel 14 mit dem Schieber 17 so angehoben worden ist, daß die Ringnut 24 mit der Verriegelung 23 fluchtet. Damit ist der Stößel 14 in der oberen Position verriegelt, d.h. er bleibt in der ausgefahrenen Position, wenn der Schieber 17 anschließend mit dem Hubzylinder 18 wieder abgesenkt wird, wie durch den in Fig. 2 rechts dargestellten Stößel 14' veranschaulicht. Demgegenüber fahren die nicht verriegelten Stößel 14 beim Absenken des Schiebers 17 wieder in die eingefahrene Position zurück, wie in Fig. 2 durch den links dargestellten Stößel 14 veranschaulicht. Es ist auch nur eine Ringnut 24 denkbar; mehrere Ringnuten 24 haben jedoch den Vorteil, daß der Stößel 14 in unterschiedlichen Höhen verriegelbar ist.

Damit eine feste Haftung der Einzelteile 7, 8, 9 und der übrigen Plattenabschnitte auf den Stößeln 14 gewährleistet ist, sind die Stößel 14 an ihrem oberen Ende mit einem Sauger 25 versehen, der über eine Saugleitung 26 mit Unterdruck beaufschlagbar ist. Um ein Zusetzen der Sauger 25 durch Schleifstaub zu verhindern, können die Sauger 25 an eine Spülleitung anschließbar sein, durch die den Saugern 25 eine Spülflüssigkeit zugeführt wird.

Die plattenförmige Aufnahme 1 stützt sich über Füße oder Seitenwände 27 auf einer Grundplatte 28 ab, auf der auch die Hubvorrichtung 18 gelagert ist.

Bei der in Fig. 3 links dargestellten Ausführungsform ist jedem Stößel 14 eine Hubvorrichtung 18' zugeordnet.

In Fig. 4 ist links ein Fingerfräser 5 und rechts ein Profilfräser 4 und die Kante des Werkstücks dargestellt.

Um das Werkstück 2 auf der Aufnahme 1 mit den Stößeln 14 abzulegen, kann ein Rost 29 vorgesehen sein. Der Rost 29 dient zugleich als Palette für die der Aufnahme 1 zuzuführende Platte 2 und wird, wie in Fig. 2 gestrichelt dargestellt, über den Stößeln 14 so angeordnet, daß die Stößel 14 beim Absenken des Rostes 29 durch die Öffnungen 30 des Rostes 29 hindurchtreten, wie für den in Fig. 2 mit ausgezogenen Linien dargestellten Rost 29 in der auf der Aufnahme 1 aufliegenden Position dargestellt. Der Rost 29 kann zum Absenken auf die Aufnahme 1 auf einen sich um die Aufnahme 1 erstreckenden Hubrahmen 31 geschoben werden. Statt dessen kann der Rost 29 auch in der in Fig. 2 gestrichelt dargestellten Position verbleiben, wobei dann die Stößel 14 entsprechend weiter ausfahrbar ausgebildet werden müssen.

Um aus einer Platte 2 Einzelteile 7, 8, 9 herauszuschneiden und an ihren Kanten zu bearbeiten, kann mit der erfindungsgemäßen Vorrichtung beispielsweise so vorgegangen werden, daß man die Platte 2 auf dem Rost 29 beispielsweise mit einer Rollenbahn auf den nach oben gefahrenen Hubrahmen 31 schiebt, worauf der Hubrahmen 31 und damit der Rost 29 mit der Platte 2 nach unten abgesenkt wird, wodurch alle Stößel 14 durch die Öffnungen 30 hindurchtreten. Damit liegt die Platte 2 fest auf den mit den Saugern 25 versehenen Stößeln 14 auf, während der Rost 29 auf der Aufnahme 1 aufliegt. Alsdann wird die Hubeinrichtung 18 betätigt, um den plattenförmigen Schieber 17 in die angehobene, gestrichelt dargestellte Position 20 zu heben, wodurch alle Stößel 14 in die ausgefahrene Position bewegt werden. Die Stößel 14', die gemäß Fig. 1 unter dem Einzelteil 8 angeordnet sind, das an den Kanten 12, 13 bearbeitet werden soll, werden nun mit ihren zugehörigen Arretiereinrichtungen 21 verriegelt. Anschließend wird der plattenförmige Schieber 17 in seine untere Position gesenkt, wodurch bis auf die verriegelten Stößel 14' und damit das Einzelteil 8 alle anderen Stößel 14 und damit die Platte 2 sowie die Einzelteile 7 und 9 und das Reststück 10 wieder nach unten bewegt werden. Die Kanten 12, 13 des Einzelteils 8 liegen nun frei, um mit dem Profilfräser 4 bearbeitet werden zu können. Das ovale Reststück 10 wird normalerweise nach dem Anheben des Einzelteils 8 mit dem Fingerfräser 5 ausgeschnitten und danach abgesenkt, um die Innenkante 13 mit dem Profilfräser 4 zu bearbeiten.

Um die Einzelteile 7, 8, 9 und das Reststück 10 nach der Kantenbearbeitung von dem Tisch 1 zu entfernen, kann eine Hubvorrichtung über dem Tisch 1 positionierbar sein, welche eine Vielzahl verteilter einzeln ansteuerbarer Sauger aufweist, so daß ein oder mehrere Einzelteile gleichzeitig abgeräumt werden können, desgleichen Reststücke.

## Patentansprüche

1. Vorrichtung zum Zuschneiden eines Werkstücks mit mindestens einer ebenen Fläche und zur Bearbeitung der Kanten der zugeschnittenen Einzelteile, mit einer plattenförmigen Aufnahme mit einer Vielzahl ein- und ausfahrbarer, einzeln ansteuerbarer Stößel, wobei das Werkstück auf die Stößel in ihrer eingefahrenen Position mit seiner ebenen Fläche legbar und wenigstens eines der Einzelteile auf der plattenförmigen Aufnahme durch Bewegung der an ihm angreifenden Stößel in die ausgefahrene Position von den anderen Einzelteilen auf der Aufnahme weg um einen mindestens der Höhe der zu bearbeitenden Kante entsprechenden Weg bewegbar ist, dadurch gekennzeichnet, daß zur Bewegung der Stößel (14, 14') von der eingefahrenen in die ausgefahrene Position ein gegenüber der Aufnahme (1) bewegbarer plattenförmiger Schieber (17) und für jeden Stößel (14, 14') einzeln ansteuerbare Arretiereinrichtungen (21) vorgesehen sind, wobei zur Bewegung der Stößel (14') in die ausgefahrene Position, die an dem an seiner Kante (12, 13) zu bearbeitenden Einzelteil (8) angreifen, zunächst alle Stößel (14, 14') ausgefahren werden, indem die Aufnahme (1) und der Schieber (17) aufeinander zu bewegt werden, worauf die Arretiereinrichtungen (21) der an dem an seinen Kanten (12, 13) zu bearbeitenden Einzelteil (8) angreifenden Stößel (14') betätigt werden und dann die Aufnahme (1) und der Schieber (17) voneinander weg bewegt werden.

2. Vorrichtung nach Anspruch 1, dadurch gekennzeichnet, daß der Schieber (17) und/oder die Aufnahme (1) bewegbar ausgebildet sind.

3. Vorrichtung nach Anspruch 1, dadurch gekennzeichnet, daß die Stößel (14, 14') an ihrem dem Werkstück (2) zugewandten Ende rutschfest ausgebildet sind.

4. Vorrichtung nach einem der vorstehenden Ansprüche, dadurch gekennzeichnet, daß ein Rost (29) als Auflage für das Werkstück (2) vorgesehen ist, wobei die Stößel (14) durch die Öffnungen (30) des Rostes (29) bewegbar sind.

5. Vorrichtung nach einem der vorstehenden Ansprüche, dadurch gekennzeichnet, daß zum Zuschneiden des Werkstücks (2) und zur Kantenbearbeitung des Einzelteils (8) eine rechnergesteuerte Werkzeugmaschine vorgesehen ist, deren Rechner zugleich die Bewegung der Stößel (14, 14') steuert.

## Claims

1. An apparatus for cutting to size a workpiece having at least one even surface and for processing the edges of the single parts cut to size, having a plate-shaped receiving means with a multiplicity of retractable and extendible, individually drivable rams, the workpiece being placed with its even surface on the rams in their retracted position, and at least one of the single parts on the plate-shaped receiving means being movable through motion of the rams acting thereon into the extended position away from the other single parts on the receiving means by a path corresponding at least to the height of the edge to be processed, characterized in that for moving the rams (14, 14') from the retracted to the extended position a plate-shaped slide (17) movable with respect to the receiving means (1) and individually drivable locking means (21) for each ram (14, 14') are provided, the rams (14') acting on the single part (8) to be processed at its edge (12, 13) being moved into the extended position by all rams (14, 14') first being extended by the receiving means (1) and the slide (17) being moved toward each other, whereupon the locking means (21) of the rams (14') acting on the single part (8) to be processed at its edges (12, 13) are operated and the receiving means (1) and the slide (17) are then moved away from each other.

2. The apparatus of claim 1, characterized in that the slide (17) and/or the receiving means (1) are of movable design.

3. The apparatus of claim 1, characterized in that the rams (14, 14') are of nonslip design at their end facing the workpiece (2).

4. The apparatus of one of the above claims, characterized in that a grate (29) is provided as a support for the workpiece (2), the rams (14) being movable through the openings (30) of the grate (29).

5. The apparatus of one of the above claims, characterized in that for cutting to size the workpiece (2) and for processing the edges of the single part (8) a computer-controlled machine tool is provided whose computer at the same time controls the motion of the rams (14, 14').

## Revendications

1. Dispositif de découpe d'une pièce d'usinage comportant au moins une surface plane et d'usinage des arêtes des éléments individuels découpés, comportant un élément de réception en forme de plaque, muni d'une multitude de poussoirs à commande individuelle susceptibles d'être rétractés et sortis, la pièce d'usinage étant susceptible d'être posée avec sa surface plane sur les poussoirs dans leur position rétractée, et au moins un des éléments individuels étant mobile sur l'élément de réception en forme de plaque en amenant les poussoirs qui l'attaquent dans la position sortie, en éloignement par rapport aux autres éléments individuels sur la plaque de réception, de la valeur d'une course correspondant au moins à la hauteur de l'arête à usiner, caractérisé en ce que pour amener les poussoirs (14, 14') depuis la position rétractée dans la position sortie, il est prévu une coulisse (17) en forme de plaque mobile par rapport à l'élément de réception (1) et pour chaque poussoir (14, 14'), il est prévu des organes d'arrêt (21) à commande individuelle, et pour amener dans la position sortie les poussoirs (14') qui attaquent l'élément individuel à usiner sur son arête (12, 13), tout d'abord tous les poussoirs (14, 14') sont sortis en amenant l'un vers l'autre l'élément de réception (1) et la coulisse (17), après quoi les organes d'arrêt (21) des poussoirs (14') attaquant l'élément individuel (8) à usiner sur ses arêtes (12, 13) sont actionnés, et ensuite, l'élément de réception (1) et la coulisse (17) sont déplacés en éloignement l'un de l'autre.

2. Dispositif selon la revendication 1, caractérisé en ce que la coulisse (17) et/ou l'élément de réception (1) sont réalisés mobiles

3. Dispositif selon la revendication 1, caractérisé en ce que les poussoirs (14, 14') sont réalisés antidérapants sur leur extrémité orientée vers la pièce à usiner (2).

4. Dispositif selon l'une quelconque des revendications précédentes, caractérisé en ce qu'une grille (29) est prévue comme plaque d'appui pour la pièce à usiner (2), les poussoirs (14) étant mobiles à travers les ouvertures (30) de la grille (29).

5. Dispositif selon l'une quelconque des revendications précédentes, caractérisé en ce que pour découper la pièce à usiner (2) et pour usiner les arêtes de l'élément individuel (8), il est prévu une machineoutil commandée par ordinateur dont l'ordinateur commande en même temps le mouvement des poussoirs (14, 14').
